# EUROPEAN PATENT APPLICATION

(11) **EP 1 367 843 A1**
(43) Date of publication of application: **03.12.2003**
(21) Application number: 02292452.6
(22) Date of filing: 04.10.2002
(51) Int. Cl.: H04Q 7/32, G06F 1/00

(54) **Secure interaction between downloaded application code and a smart card in a mobile communication apparatus**

(30) Priority: 30.05.2002 EP 02077120
(71) Applicant: SCHLUMBERGER Systèmes, 92120 Montrouge (FR)
(72) Inventor: Mahalal, Llan, c/o Schlumberger Systèmes, 92542 Montrouge Cédex (FR)

(57) **Abstract**

A method for controlling the access to a security token (CAR) in a communication apparatus (ME) by downloaded applications (DA) accessing the security token, characterized in that it comprises the following steps:
a. A service-accessing step in which a downloaded application (DA) requests an access to the security token (CAR),
b. A service-checking step in which a security token manager (STM), stored in the communication apparatus, checks the corresponding rights,
c. And in that, the communication apparatus storing a plurality of security token interfaces (STI), the Security Token Manager (STM)delivers the demanded Security Token Interface (STI) to the application (DA) if rights are satisfied or reject the demand .

## Description

### What is the field of the invention?

Many cryptographic tokens such as Integrated Circuit Cards (IC cards or 'smart cards') are intrinsically secure computing platforms ideally suited to providing enhanced security and privacy functionality to applications. They can handle authentication information such as digital certificates and capabilities, authorizations and cryptographic keys. Furthermore, they are capable of providing secure storage and computational facilities for sensitive information such as:
- Private keys and key fragments.
- Account numbers and stored value.
- Passwords and shared secrets.
- Authorizations and permissions.

At the same time, many of these tokens provides an isolated processing facility capable of using this information without exposing it within the host environment where it is at potential risk from hostile code (viruses, Trojan horses, and so on). This becomes critically important for certain operations such as:
- Generation of digital signatures, using private keys, for personal identification.
- Network authentication based on shared secrets.
- Maintenance of electronic representations of value.
- Portable permissions for use in off-line situations.

New mobile phones are emerging which allow additional downloaded code to be installed in the phone. A concrete example is Java enabled mobile phone that can install new downloaded applets. This gives a versatile solution for adding new applications to the mobile phone. The user can select the applications that he needs and download them from a server. Examples of applications can be games, Calendar and meeting management, e-commerce enabler applications etc. Some of these applications may need to interact with the security token (SIM card or any other type of smart card or security token in the phone) in the mobile phone in order to benefit from its virtues as described above. This is especially important for downloaded applications that want to implement security related solutions and may need to access the smart card functions or store sensitive data in the card. Since downloaded code is not necessarily trusted the access to the smart card must be controlled and secure. Malicious applets may introduce security problems by using the smart card in a malicious way. Some of the possible attacks are described below:
- Denial of service attacks (the Downloaded application can constantly send APDU commands to the SIM)
- PIN code stealing (a malicious Downloaded application may capture the user's PIN code and send it over the network and/or authenticates itself as the user). If the Downloaded application is then able to use this PIN code and send it to the card it can manage to do operations that normally can only be done upon user consent. An example is performing a non-repudiation digital signature with the smart card without user approval.
- Gain read access to the user's private information on the card if a Downloaded application manages to get hold of the user's PIN code
- Change data in the card if a Downloaded application manages to get hold of the user's PIN code

This leads to a solution by which there is an access control to the smart card and also associated mechanisms that guarantee a controlled and secure interaction.

### What is already known?

Mobile phones (or equivalent mobile apparatus like PDAs) are emerging which allow the downloading of new applications code in the phone. The interface between these apparatus and a smart card (or equivalent security token) in the phone is not defined today. This interface must give a solution that solves the threats that were expressed above. The aim of this invention is to provide such a solution.

### What problem needs to be solved?

This invention concerns a method for controlling the access to the security token (e.g. smart card) in the phone or a communication apparatus. It should define a controlled and secure access to the security token by which the newly downloaded applications can benefit from its functionality but at the same time cannot attack it or use it maliciously against the user or other parties that are involved in the application domain.

### How is the problem solved ?

The solution relies on the existence of the following identified roles in the mobile telecommunication arena:
- Downloaded application provider (or service provider): These companies develop applications that can then be downloaded to the mobile phone. They provide value added services, useful applications and/or games and entertainment in which the user may be interested. The user can download these applications and install them in the phone.
- Telecom operator: Provide the network infrastructure for the communication and application download. The network operator is also the owner of the smart card (e.g. SIM card) in the phone and wants to control the access to it by non-authorized parties (e.g. downloaded application code).
- Phone manufacturer - Provide the phone and the integrated operating system that allows new application download.

The identified roles suggest that access control and usage of the security token in the phone (or other communication apparatus) should be defined and implemented by the security token owner. In the case of a SIM card in GSM phones the security token owner is the Telecom operator, but in other business contexts it may be another entity.

The invention concerns a method, implemented by several modules in the communication apparatus, by which the security token owner can, dynamically and also remotely, install security token a plurality of interfaces (one or more) in the communication apparatus. These interfaces, and only these interfaces, can be used by the downloaded applications in order to access the security token. Also, downloaded applications can gain different security token interfaces depending on the credentials that they can present.

A module called "Security Token Manager" is implemented in the communication apparatus (e.g. mobile phone) operating system in order to implement the proposed solution. This module controls the installation of new "Security Token Interfaces" in the communication apparatus. Security Token Interfaces are software modules that implement access to the Security Token and expose a limited and high-level functions for the downloaded applications in order to access the Security Token functionalities. Several Security Token Interfaces modules can be installed, each of which implement different kind of interfaces for different functionalities. Preferably, only the security token owner can install these Security Token Interfaces. The Security Token Manager installs the code for these interfaces only if it can verify that the Security Token Interfaces code is signed by the Security Token Owner. A digital signature using public key cryptography can be used for this purpose and the trusted certificate for verifying it may be retrieved from the Security Token itself.
A downloaded application that needs to communicate with the Security Token (e.g. smart card) will ask the Security Token Manager an interface object in order to communicate with the Security Token. The downloaded application will indicate the needed interface object name and then the Security Token Manager will need to check the downloaded application credentials in order to verify if it has the right to access this interface. The safest way to indicate a downloaded application credentials is to include it in its downloaded code with a digital signature that can be verified by the communication apparatus (e.g. mobile phone) operating system. The Security Token Manager will retrieve the downloaded application credentials from the operating system and will then be able to deduce the access rights of the downloaded application.

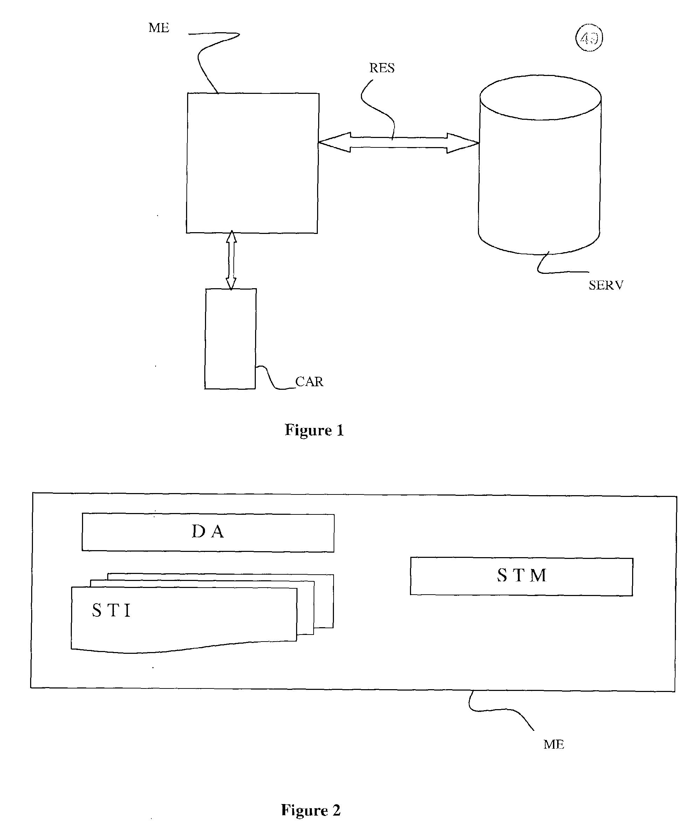

Figure 1 illustrates the relations between the different components in the described solution.

The described solution resolves the security issues that were expressed before in this document. Another main advantage of this solution is the full control that the Security Token Owner has over the access interface which is accessible to downloaded applications. The Security Token Owner can remotely and dynamically add Security Token Interfaces or remove some of them. This solution open the door to some interesting business models for deploying security related services with downloaded applications.

### Detailed Description of Examples Illustrating the Invention

In order to simplify the description, the same elements illustrated in the drawings have the same references.

Figure 1 represents an example of a data processing system S in which the invention may be applied.

Figure 2 illustrates a view of a communication apparatus including the following modules: a downloaded application, a security token manager and a security token interface.

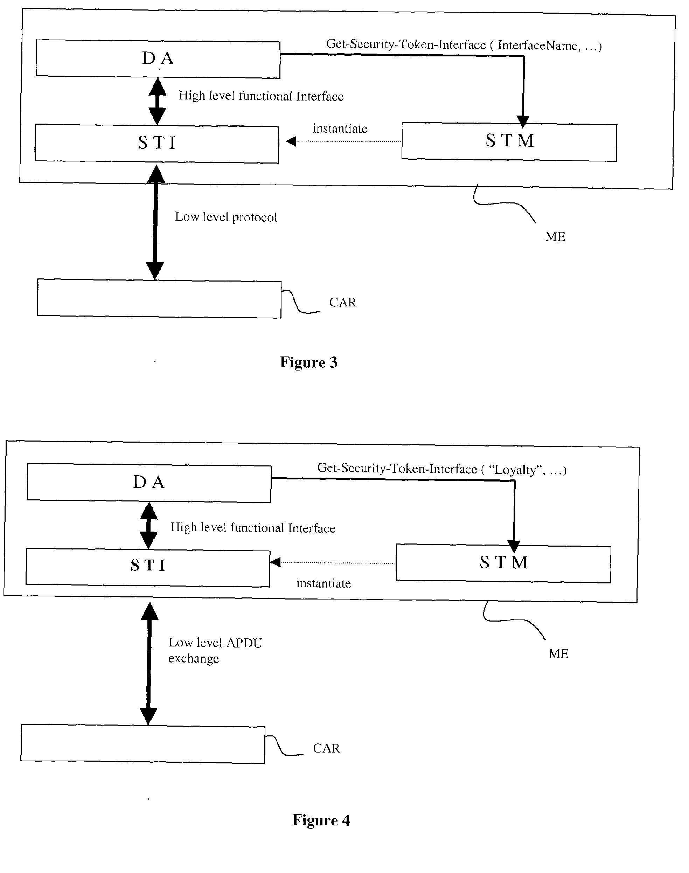

Figures 2 and 3 illustrates the interactions between the modules into the communication apparatus and between the communication apparatus and the security token.

Figure 1 represents a system S. In our example, this system includes a smart card CAR coupled to a device ME communicating with a server SERV through a network RES.
The following scenario aims to illustrate the interactions between a downloaded application DA in a mobile phone ME and the SIM smart card CAR in the phone. In this example, the SIM smart card has an application that manages cumulated loyalty points.

### Purpose

This example illustrates the usage of the SIM card for providing a common secure portable data sharing media to several downloaded applications residing on the mobile device ME.

### Description

The user downloads and runs a variety of downloaded applications, games and online gaming or information services. As the downloaded applications DA are run the user gains points e.g. Loyalty points. Instead of being stored within the downloaded applications these points are stored on the SIM card CAR and then used as a common access pool to other downloaded applications.

### Role of the card

The card stores the users private loyalty points and can select if these points are used to upgrade for newer levels (an update of the downloaded application can then take place or a request can be sent to allow the SIM card CAR to authorize the next level) or further services. In addition, the points can be used to "pay" for additional network services such as ring-tones or additional airtime in pre-paid. The advantage of being on the card is that a user could transfer them to another mobile phone, which could contain the same suite of downloaded applications.

### Implementation of the above scenario

Several downloaded applications can share the same secure storage for loyalty points that is managed by a custom smart card application in the SIM card. A downloaded application that needs to update or read current loyalty points status asks the Security Token Manager STM for the Security Token Interface called "loyalty".
The Security Token Manager STM will deliver this service object only if it can verify that the downloaded application DA is authorized to use it (e.g. has credentials with the right digital signature). The Security Token Interface STI object was downloaded before by the Telecom Operator or was retrieved directly from the smart card itself. In our example, the service provider that delivers the downloaded application has an agreement with the telecom operator to use this interface. As a result the downloaded application DA knows how to interact the interface high level functions.

In this example the "loyalty" Security Token Interface object contains three functions:
- VerifyUserIdentity()
- IncrementPoints(number)
- DecrementPoints(number)

In our example, when the downloaded application calls the VerifyUserldentity function the Security Token Interface object STI handles all the user interface interactions with the user in order to capture the user's PIN code and send it to the smart card application. The user's PIN code is not delivered to the downloaded application for security reasons. The Security Token Interface object also selects the needed smart card application and formats all APDU commands (low level smart card commands) that need to be sent.
When the downloaded application DA calls the IncrementPoints or the DecrementPoints functions the Security Token Interface object STI formats all the needed APDU commands that are needed to implement these functions, and send them to the smart card application.

## Claims

1. A method for controlling the access to a security token (CAR) in a communication apparatus (ME) by downloaded applications (DA) accessing the security token, **characterized in that** it comprises the following steps:
a. A service-accessing step in which a downloaded application (DA) requests an access to the security token (CAR),
b. A service-checking step in which a security token manager (STM), stored in the communication apparatus, checks the corresponding rights,
c. And **in that**, the communication apparatus storing a plurality of security token interfaces (STI), the Security Token Manager (STM)delivers the demanded Security Token Interface (STI) to the application (DA) if rights are satisfied or reject the demand .

2. The method according to claim 1, **characterized in that** the downloaded application (DA) is encrypted and/or signed, and **in that** for performing the service-checking step, the security token manager (STM) checks the corresponding rights by determining credentials using the corresponding encryption key or the digital signature.

3. The method according to claim 1, **characterized in that** each interface (STI) comprises high-level functions for the downloaded applications (DA) in order to access the Security Token (CAR) functionalities, and **in that** the interface (STI) formats all APDU commands (low level smart card commands) that need to be sent to the security token (CAR).

4. The method according to claims 1 or 3, **characterized in that** said interfaces (STI) are remotely installed in the communication apparatus (ME) by the security token owner.

5. The method according to claim 4, **characterized in that** the Security Token Manager (STM) installs the code for the interfaces in the communication apparatus (ME) only if it can verify that the Security Token Interfaces code is signed by the Security Token Owner.

6. The method according to claim 5, **characterized in that** a digital signature using public key cryptography is used and the trusted certificate for verifying it is retrieved from the Security Token (CAR) itself.

7. The method according to claim 1, **characterized in that**, in step c), if the downloaded application (DA) has no rights no Security Token Interface (STI) object is delivered.
